Europäisches Patentamt

European Patent Office

Office européen des brevets

(11) Publication number: **0 117 271**
**B1**

(12) **EUROPEAN PATENT SPECIFICATION**

(45) Date of publication of patent specification: **10.12.86**

(21) Application number: **83101959.1**

(22) Date of filing: **28.02.83**

(51) Int. Cl.⁴: **F 16 K 11/087**

(54) **A three-way valve.**

(43) Date of publication of application:
**05.09.84 Bulletin 84/36**

(45) Publication of the grant of the patent:
**10.12.86 Bulletin 86/50**

(84) Designated Contracting States:
**DE GB IT NL**

(56) References cited:
**FR-A-1 538 606**
**FR-A-2 031 347**
**US-A-2 492 151**
**US-A-3 199 537**
**US-A-3 498 328**
**US-A-4 223 700**

(73) Proprietor: **China Great Wall Industry
Corporation
No. 17 Wen Chang Hu Tong
Beijing (CN)**

(72) Inventor: **Yingzhou, Jiang
Yungang Fengtai District P.O. Box 7215
Beijing (CN)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The invention relates to a three-way valve comprising a valve body consisting of one or more body sections and outwardly connected to a first duct and a second duct to be cut off or alternatively brought into communication with a third duct also connected to the valve body, a plug mounted rotatably about an axis of rotation within the valve body and containing an interconnection channel for alternatively interconnecting one of the first or second ducts with the third duct and driving means for turning the plug via a stem which is connected at one end of the plug and at the other end to the driving means, wherein the axis of rotation of the plug passes through the intersection point of the central lines of the two ducts and whereby the angle between the central line of the interconnection channel and the axis of rotation of said plug equals half of the angle between the central lines of the first and second ducts.

In such a prior art valve (US—A—3 199 537) the third duct is connected to the valve body such that its central line lies within the bisected plane of the angle between the central lines of the first and second ducts and also passes through the intersection point of said central lines.

The axis of rotation of the plug is aligned with the central line of the third duct. The connection channel of said plug is formed by a generally axially extended radial opening groove, the axis of which is generally coaxial with either of said first and second ducts when said groove is aligned with either of same by rotation of the plug.

FR—A—1 538 606 discloses a valve, the plug of which has a truncated shape and comprises a channel having a curved central line and also a correspondingly shaped boundary wall. The axis of rotation of the plug is aligned with the central line of the third duct. The first and second ducts also have a curved central line and their mounds are laying in a common plane which is aligned with the plane of the plug facing the first and second ducts. In said prior art the curved interconnection channel can also be substituted by a straight channel. Furthermore, sealing means can be provided between both the planar surfaces of the plug and the valve body facing each other. If straight lines tangent to the curved central lines of the first and second ducts are considered, the axis of rotation of the plug and the plane formed by the central lines of the first duct and the second duct define an angle smaller than 90 degrees. Said axis of rotation is apparently within the bisected plane of the angle between the central lines of the first and second ducts and also passes through the intersection point of the central lines of the two ducts.

US—A—2 492 151 discloses a valve having first to fourth ducts the central lines of which lay in a common plane which is perpendicular to the central line of a fifth duct. The plug has the shape of a hollow hemisphere and its axis of rotation is aligned with the central line of the fifth duct. Around the mounds of the first to fourth ducts sealing means are arranged engaging the outer curved surface of the hemispheric plug. In said known valve the fluid flow between one of the first to fourth ducts and the fifth duct makes a turn of about 90 degrees and, therefore, the flow resistance of the valve is relatively high.

FR—A—2 031 347 discloses a valve also comprising first to fourth ducts to be connected with a fifth duct. The axis of rotation of the plug comprising a curved interconnection channel is apparently the bisector of the angle between the central lines of two adjacent ducts from the first to fourth ducts.

US—A—3 498 328 discloses a valve comprising first and second ducts to be connected with a third duct via a straight interconnection channel within a plug the axis of rotation of which is perpendicular to the planar side surfaces of the plug facing the first and second ducts and the third duct, respectively. The central line of either the first or second duct is aligned in one straight line with the central line of the third duct. In said prior art valve, the sealing surfaces between the plug and the ducts are planar and, therefore, the interconnections between the channel of the plug and the ducts can be sufficiently sealed only for fluid flows under low pressure.

It is the object of the invention to improve a valve as defined in the prior art portion of claim 1 such that any angle between the first and second ducts can be chosen according to the particular requirements of the system using the valve and to provide a sealed communication between the ducts providing a low flow resistence between input and output of the valve.

In a valve as defined in the prior art portion of claim 1, said object is obtained in accordance with the invention in that the plug presents a frustroconical circumferential surface and curved end surfaces, the interconnection channel is formed by a straight tubular bore extending between both curved end surfaces, the plug is supported within the valve body by at least two carrier bearings arranged around the plug circumference, seals are arranged between the valve body and the plug at the openings of the ducts facing the curved end surfaces of said plug, and the central line of either the first duct or the second duct is aligned in one straight line with the central line of the third duct.

In the valve according to the invention, one straight line is formed in which either the first or second duct is aligned with the third duct. The plug has curved end surfaces engaging seals which are arranged between the valve body and the plug at the openings of the first, second and third ducts. The angle between the first and second ducts may be selected within a wide range to meet the particular installation requirements; the turning range of the fluid medium in the passage is small, thus reducing the loss due to flow resistance; the plug is easy to manufacture, since the plug channel is a straight one; fluid medium can move smoothly through the plug and will not block the plug hole, and this feature will become particularly significant when the fluid medium is in powder form; the valve according to the invention has the functions of both cut-off and change, thus reducing the number of valves to be used in a system and making it simple; since the stem is within the plane formed by the central lines of the first and second ducts, the valve occupies a small space and makes its operation easy; as the moment of inertia of the stem is small, the driving means may be relatively small-powered accordingly; since the valve has a compact structure, it is not very heavy in weight and not very big in size. This feature will become prominent in case of big-sized three-way valves.

A particular embodiment of the invention is set out in dependent claim 2.

Other features and advantages of the present invention will become more fully apparent from the following detailed description of a specific embodiment in connection with the accompanied drawings in which:

Figure 1 is a schematic plan section view illustrating the position of each main part;

Figure 2 is a partial section view of one seat illustrating the structure of the seat; and

Figure 3 is a partial section view of the sealing device for the stem.

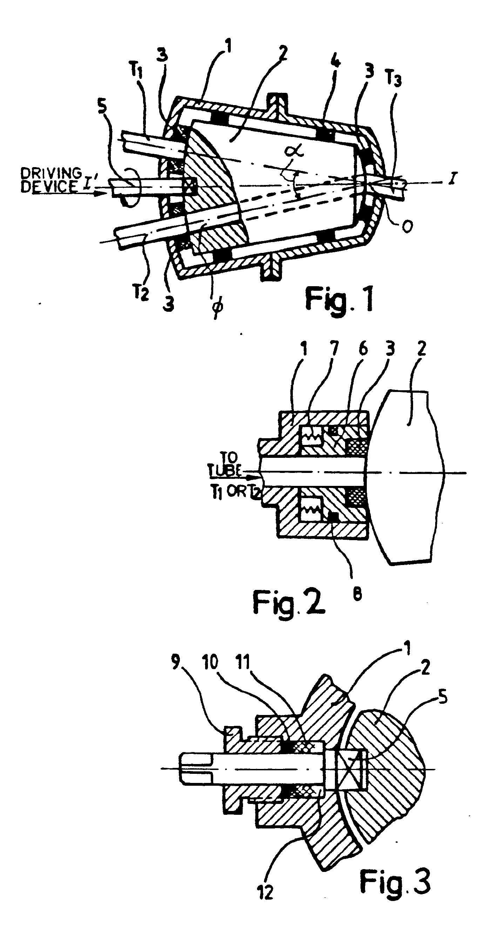

The working principle of the valve according to the invention is explained in the following in connection with the schematic embodiment shown in Figures 1 to 3: As shown in Figure 1, $T_1$, $T_2$ and $T_3$ are the ducts to be cut off or exchanged. Ducts $T_1$ and $T_3$ have a common central line. The central line of duct $T_2$ intersects that of ducts $T_1$ and $T_3$ at point 0, making an angle a. A plug 2 turns around axis I—I'. There is a straight channel φ in plug 2. The central line of plug channel φ and the axis I—I' make an angle which equals half of angle a. As viewed in Figure 1, when channel φ is connected to ducts $T_2$ and $T_3$, ducts $T_2$ and $T_3$ are connected through. When plug 2 turns 180 degrees, channel φ is connected to duct $T_1$ and $T_3$, and ducts $T_1$ and $T_3$ are connected through forming a most desirable straight line, while duct $T_2$ is cut off.

Theoretically speaking, the angle formed by the central lines of duct $T_1$ and duct $T_2$ can be any degree ranging from 90 degrees to less than 90. Obviously, the smaller angle a is, the smaller turn the fluid medium makes and the less the loss due to flow resistance will be. However, the degree of angle a is restricted by the dimension of the structure of the valve. Therefore, when there is no special requirement for angle a, the best choice is 45 degrees.

The above description is based on the assumption that axis I—I' is within the plane formed by the central lines of ducts $T_1$ and $T_2$ (See Figure 1), and that axis I—I' is the bisector of angle a, that is the axis of plug 2. The position of axis I—I' as described above is the best mode of the present invention.

Valve body 1 is in two sections, that is a left hand body section and a right hand body section. As for big-sized three-way valves, intermediate body sections may be added so as to facilitate processing and assembling. The body sections are outwardly connected to ducts in the form of tubes to be cut off or exchanged. Plug 2 is a body with curved end surfaces and a frustroconical circumferential surface. Plug channel φ is a straight one, which is easy to manufacture and ensures a necessary surface finish. In the case of big-sized three-way valves, a hollow plug may be desirable. Plug 2 is supported in body 1 by carrier bearings 4. Bearing 4 may be a sliding bearing, which may be a plastic one, a self-lubricating one or a bearing made of a wear-resisting alloy. As for big-sized three-way valves, ball bearings that can bear radial charges should be used because the plug may be affected by a side force as a result of the movement of the fluid medium. Stem 5 is mounted on the flange of the body. One of its ends is connected to plug 2, so that when it is driven, plug 2 turns accordingly in body 1. As illustrated in Figure 1, fluid medium in tube $T_2$ passes through plug 2 and turns an angle at the joint of plug 2 and body 1, then enters into tube $T_3$. When plug 2 turns 180 degrees, the straight plug channel φ is connected with tube $T_1$ and tubes $T_1$ and $T_3$ are connected through making a straight line. Fluid medium in tube $T_1$ passes through the straight channel of plug 2, then enters into tube $T_3$ directly without making any turn. The other end of stem 5 is connected to driving means (including a reducer, a direction changing system and an indication device). The driving means may be manual, electric, pneumatic or hydraulic.

Seat or seal 3 is mounted in body 1 performing the function of sealing and partially supporting. There are valve seats of two different dimensions to choose. As described in Figure 2, seat 3 is inlaid in a carrier 6 and is tightly pressed onto the curved end surface of plug 2 by a spring 7. Sealing washer 8 is of standard design, which is available on the market. In the case of small-sized three-way valves, seat 3 may be mounted on body 1 directly.

Figure 3 is a sectional view of a typical sealing device for stem 5. The sealing device consists of a gland 9, an upper packing 10, a middle packing 11 and a packing washer 12. The sealing degree may be regulated by turning gland 9.

**Claims**

1. A three-way valve comprising a valve body (1) consisting of one or more body sections and outwardly connected to a first duct ($T_1$) and a second duct ($T_2$) to be cut off or alternatively brought into communication with a third duct ($T_3$) also connected to the valve body (1), a plug (2) mounted rotatably about an axis of rotation (I—I') within the valve body (1) and containing an interconnection channel (φ) for alternatively interconnecting one of the first or second ducts ($T_1$ of $T_2$) with the third duct ($T_3$), and driving means for turning the plug (2) via a stem (5) which is

3

connected at one end of the plug and at the other end to the driving means, wherein the axis of rotation (I—I') of the plug (2) passes through the intersection point of the central lines of the two ducts ($T_1$, $T_2$) and whereby the angle between the central line of the interconnection channel ($\varphi$) and the axis of rotation of said plug (2) equals half of the angle ($\alpha$) between the central lines of the first and second ducts ($T_1$, $T_2$), characterised

— in that the plug (2) presents a frustroconical circumferential surface and curved end surfaces,

— in that the interconnection channel ($\varphi$) is formed by a straight tubular bore extending between both curved end surfaces,

— in that the plug (2) is supported within the valve body by at least two carrier bearings (4) arranged around the plug circumference,

— in that seals (3) are arranged between the valve body (1) and the plug (2) at the openings of the ducts ($T_1$, $T_2$, $T_3$) facing the curved end surfaces of said plug (2), and

— in that the central line of either the first duct ($T_1$) or the second duct ($T_2$) is aligned in one straight line with the central line of the third duct ($T_3$).

2. Valve according to claim 1, wherein said angle ($\alpha$) between the central lines of the first and second ducts ($T_1$, $T_2$) may be any degree ranging from 90 degrees to less than 90 degrees, preserving one most desirable straight communication line with the third duct ($T_3$), thus allowing the fluid medium to make a small turn in the passage and reducing loss due to flow resistance.

## Patentansprüche

1. Drei-Wege-Ventil mit einem Ventilgehäuse (1), das aus einem oder mehreren Gehäuseteilen besteht und nach außen mit einer ersten Leitung ($T_1$) und einer zweiten Leitung ($T_2$) verbunden ist, die von einer ebenfalls mit dem Ventilgehäuse (1) verbundenen dritten Leitung ($T_3$) abtrennbar oder wechselweise mit dieser in Verbindung bringbar sind, einem innerhalb des Ventilgehäuses um eine Drehachse (I—I') drehbar gelagerten Absperrglied (2), das einen Verbindungskanal ($\varphi$) zum wechselweisen Verbinden einer der ersten oder zweiten Leitungen ($T_1$ oder $T_2$) mit der dritten Leitung ($T_3$) enthält, und einer Antriebseinrichtung zum Drehen des Absperrgliedes (2) über einen Zapfen (5), der an einem Ende mit dem Absperrglied (2) und am anderen Ende mit der Antriebseinrichtung verbunden ist, wobei die Drehachse (I—I') des Absperrgliedes (2) durch den Schnittpunkt der Mittellinien der zwei Leitungen ($T_1$, $T_2$) hindurchgeht und wodurch der Winkel zwischen der Mittellinie des Verbindungskanals ($\varphi$) und der Drehachse (I—I') des Absperrgliedes (2) gleich der Hälfte des Winkels ($\alpha$) zwischen den Mittellinien der ersten und zweiten Leitungen ($T_1$, $T_2$) ist, dadurch gekennzeichnet,

— daß das Absperrglied (2) eine kegelstumpfförmige Mantelfläche und gebogene Stirnflächen hat,

— daß der Verbindungskanal ($\varphi$) durch eine gerade rohrförmige Bohrung gebildet ist, die sich zwischen beiden gebogenen Stirnflächen erstreckt,

— daß das Absperrglied (2) innerhalb des Ventilgehäuses durch mindestens zwei Trägerlager (4) gehalten ist, die um die Absperrglied-Mantelfläche herum angeordnet sind,

— daß Dichtungen (3) zwischen dem Ventilgehäuse (1) und dem Absperrglied (2) an den Mündungen der Leitungen ($T_1$, $T_2$, $T_3$), die den gebogenen Stirnflächen des Absperrgliedes (2) zugewandt sind, angeordnet sind, und

— daß die Mittellinie entweder der ersten Leitung ($T_1$) oder der zweiten Leitung ($T_2$) mit der Mittellinie der dritten Leitung ($T_3$) in einer geraden Linie fluchtet.

2. Ventil nach Anspruch 1, wobei der Winkel ($\alpha$) zwischen den Mittellinien der ersten und zweiten Leitungen ($T_1$, $T_2$) jede Größe in einem Bereich von 90° bis zu weniger als 90° haben kann, um eine möglichst gerade Verbindungslinie mit der dritten Leitung ($T_3$) zu erhalten, wodurch das Strömungsmedium in dem Verbindungskanal eine nur geringe Ablenkung erfährt und die Verluste infolge des Strömungswiderstandes vermindert sind.

## Revendications

1. Robinet à trois voies comprenant un corps de robinet (1) constitué d'une ou plusieurs sections de corps et relié vers l'extérieur à une première canalisation ($T_1$) et une seconde canalisation ($T_2$) devant être fermées ou alternativement mises en communication avec une troisième canalisation ($T_3$) également reliée au corps de robinet (1), un bouchon (2) monté tournant autour d'un axe de rotation (I—I') à l'intérieur du corps de robinet (1) et contenant un passage d'intercommunication ($\varphi$) pour mettre en communication de façon alternative l'une des première ou seconde canalisations ($T_1$ ou $T_2$) avec la troisième canalisation ($T_3$), et un moyen d'actionnement pour faire tourner le bouchon (2) par l'intermédiaire d'une tige (5) qui est reliée à une extrémité du bouchon et à l'autre extrémité du moyen d'actionnement, dans lequel l'axe de rotation (I—I') du bouchon (2) traverse le point d'intersection des lignes centrales des deux canalisations ($T_1$, $T_2$) et au moyen duquel l'angle entre la ligne centrale du passage d'intercommunication ($\varphi$) et l'axe de rotation dudit bouchon (2) est égal à la moitié de l'angle ($\alpha$) formé entre les lignes centrales des première et seconde canalisations ($T_1$, $T_2$), caractérisé:

— en ce que le bouchon (2) présente une surface circonférentielle tronconique et des surfaces d'extrémité incurvées;

— en ce que le passage d'intercommunication ($\varphi$) est formé par un alésage tubulaire rectiligne s'étendant entre les deux surfaces d'extrémité incurvées;

— en ce que le bouchon (2) est soutenu à l'intérieur du corps de robinet par au moins deux paliers de support (4) disposés autour de la circonférence du bouchon;

— en ce que des joints (3) sont disposés entre le corps de robinet (1) et le bouchon (2) aux orifices des canalisations (T₁, T₂, T₃) faisant face aux surfaces d'extrémité incurvées dudit bouchon (2); et

— en ce que la ligne centrale de l'une ou l'autre de la première canalisation (T₁) et de la seconde canalisation (T₂) est alignée, selon une ligne droite, sur la ligne centrale de la troisième canalisation (T₃).

2. Robinet selon la revendication 1, caractérisé en ce que ledit angle (α) entre les lignes centrales des première et seconde canalisations (T₁, T₂) peut avoir n'importe quelle valeur comprise entre 90° et moins de 90°, de manière à conserver la ligne de communication rectiligne la plus souhaitable avec la troisième canalisation (T₃), ce qui permet au milieu fluide de suivre une trajectoire légèrement incurvée dans le passage et de réduire les pertes dues à la résistance à l'écoulement.

**Fig. 1**

**Fig. 2**

**Fig. 3**